# EUROPÄISCHE PATENTSCHRIFT

(11) **EP 2 198 493 B1**
(45) Veröffentlichungstag und Bekanntmachung des Hinweises auf die Patenterteilung: **11.07.2012**
(21) Anmeldenummer: 08759996.5
(22) Anmeldetag: 26.05.2008
(51) Int. Cl.: F02P 23/04, H01S 3/113, H01S 3/13

(54) **LASEREINRICHTUNG UND BETRIEBSVERFAHREN HIERFÜR**
LASER DEVICE AND OPERATING METHOD THEREFOR
DISPOSITIF LASER ET PROCÉDÉ PERMETTANT DE LE FAIRE FONCTIONNER

(30) Priorität: 31.08.2007 DE 102007041529
(43) Veröffentlichungstag der Anmeldung: 23.06.2010
(73) Patentinhaber: Robert Bosch GmbH, 70442 Stuttgart (DE)
(72) Erfinder: RIDDERBUSCH, Heiko, 71701 Schwieberdingen (DE)
(86) Internationale Anmeldenummer: PCT/EP2008/056397
(87) Internationale Veröffentlichungsnummer: WO 2009/030527

(56) Entgegenhaltungen:
- EP-A- 0 858 138
- WO-A-98/56088
- US-A- 5 226 051

## Beschreibung

### Stand der Technik

Die Erfindung betrifft ein Verfahren zum Betreiben einer Lasereinrichtung, die einen laseraktiven Festkörper und eine, vorzugsweise passive, Güteschaltung aufweist, bei dem die Lasereinrichtung mit Pumplicht beaufschlagt wird, um einen Laserimpuls zu erzeugen.

Die Erfindung betrifft ferner eine Lasereinrichtung mit einem laseraktiven Festkörper und einer, vorzugsweise passiven, Güteschaltung, wobei die Lasereinrichtung mit Pumplicht beaufschlagbar ist, um einen Laserimpuls zu erzeugen.

Derartige Verfahren und Vorrichtungen sind bekannt und u.a. beispielsweise zur zukünftigen Verwendung in Zündeinrichtungen von Brennkraftmaschinen vorgesehen. Um einen zuverlässigen Betrieb der Lasereinrichtung zu gewährleisten, sehen herkömmliche Betriebsverfahren vor, ein mit dem erzeugten Laserimpuls korrespondierendes optisches Signal auszuwerten. Dadurch ist es beispielsweise möglich, ein verspätetes Auftreten des Laserimpulses oder auch das Ausbleiben des Laserimpulses zu erkennen.

Nachteilig an den bekannten Verfahren und Systemen ist die Tatsache, dass eine Auswertung eines gegebenenfalls erzeugten Laserimpulses die Anordnung eines Auskoppelspiegels oder einer sonstigen Auskoppeloptik in einem Strahlengang der Lasereinrichtung erfordert, um einen zur Diagnose erforderlichen Anteil der Strahlungsintensität des Laserimpulses beispielsweise einem Detektorelement zuleiten zu können. Die erforderlichen Auskoppelspiegel beeinträchtigen aufgrund ihrer Anordnung in dem Strahlengang der bekannten Lasereinrichtungen die Qualität und insbesondere den optischen Wirkungsgrad derartiger Systeme und bedingen darüber hinaus einen komplexen Aufbau.

Weitere Lasereinrichtung und Verfahren sind aus der WO 98 56 088 A, der US 5 226 051-A und der EP 0858 138-A bekannt.

### Offenbarung der Erfindung

Dementsprechend ist es Aufgabe der vorliegenden Erfindung, eine Lasereinrichtung und ein Betriebsverfahren der eingangs genannten Art dahingehend zu verbessern, dass unter Vermeidung der von dem Stand der Technik bekannten Nachteile auf einfache Weise Informationen über einen Betriebszustand der Lasereinrichtung gewinnbar sind.

Diese Aufgabe wird bei einem Verfahren der eingangs genannten Art erfindungsgemäß dadurch gelöst, dass von der Lasereinrichtung spontan emittierte Strahlung analysiert wird, um hieraus auf einen Betriebszustand der Lasereinrichtung zu schließen, insbesondere auf die Erzeugung eines Laserimpulses.

Das erfindungsgemäße Prinzip vermeidet demnach bewusst die direkte Analyse einer Strahlungsintensität eines gegebenenfalls erzeugten Laserimpulses, so dass vorteilhaft auf die bei den herkömmlichen Systemen erforderlichen Auskoppeloptiken und dergleichen verzichtet werden kann. Vielmehr sieht das erfindungsgemäße Verfahren eine Analyse der kurz auch als "Spontanemission" bezeichneten spontan emittierten Strahlung der Lasereinrichtung vor, wie sie sich beispielsweise bei der Beaufschlagung der Lasereinrichtung mit Pumplicht ergibt. Erfindungsgemäß ist erkannt worden, dass auch die spontan emittierte Strahlung Informationen über den Betrieb der Lasereinrichtung enthält und dementsprechend Rückschlüsse über das Betriebsverhalten der Lasereinrichtung zulässt.

Bei einer besonders vorteilhaften Variante des erfindungsgemäßen Betriebsverfahrens ist vorgesehen, dass die Lasereinrichtung zumindest longitudinal mit dem Pumplicht angeregt wird, und dass transversal abgestrahlte spontan emittierte Strahlung analysiert wird. Hierdurch ist vorteilhaft die Möglichkeit gegeben, Informationen über einen Betriebszustand der Lasereinrichtung zu erhalten, ohne zusätzliche optische Elemente in einem Hauptstrahlengang der Lasereinrichtung anordnen zu müssen. Dadurch ergibt sich insbesondere keine Verschlechterung des Wirkungsgrads der Lasereinrichtung, wie sie bei herkömmlichen Systemen mit entsprechenden Auskoppeloptiken gegeben ist.

Einer weiteren sehr vorteilhaften Variante des erfindungsgemäßen Betriebsverfahrens zufolge ist vorgesehen, dass ein zeitlicher Verlauf der Intensität der spontan emittierten Strahlung erfasst und analysiert wird, wodurch eine besonders präzise Aussage über das Betriebsverhalten beziehungsweise einen Betriebszustand der Lasereinrichtung getroffen werden kann. Die Analyse des erfindungsgemäß erfassten Zeitverlaufs der spontan emittierten Strahlung kann in dem Fachmann bekannter Weise beispielsweise durch Differenzieren oder durch sonstige geeignete Analyseverfahren vorgenommen werden.

Bei einer weiteren sehr vorteilhaften Ausführungsform des erfindungsgemäßen Betriebsverfahrens ist vorgesehen, dass die Analyse der spontan emittierten Strahlung in Abhängigkeit eines Pumpstartzeitpunkts durchgeführt wird, zu dem die Beaufschlagung der Lasereinrichtung mit Pumplicht gestartet wird. Hierdurch ist vorteilhaft sichergestellt, dass möglichst viele Informationen über den Betriebszustand der erfindungsgemäßen Lasereinrichtung zum Zwecke der Analyse aufgenommen werden können. Beispielsweise ist es zweckmäßig, die erfindungsgemäße Analyse direkt zu dem Pumpstartzeitpunkt zu starten oder auch um eine vorgebbare Wartezeit hierzu verzögert, wodurch die zu verarbeitende Datenmenge reduziert werden kann.

Ganz besonders vorteilhaft ist bei einer weiteren Variante des erfindungsgemäßen Betriebsverfahrens vorgeschlagen, dass die Analyse der spontan emittierten Strahlung das Auffinden eines Maximums der Intensität der spontan emittierten Strahlung umfasst. Erfindungsgemäß ist erkannt worden, dass bei der Erzeugung eines Laserimpulses in der Lasereinrichtung eine zeitliche Korrelation gegeben ist zwischen der tatsächlichen Erzeugung des Laserimpulses und einem zeitlichen Verlauf der Intensität der spontan emittierten Strahlung derart, dass bis vor der Erzeugung des Laserimpulses die Intensität der spontan emittierten Strahlung zunimmt, und dass nach oder während der Erzeugung des Laserimpulses eine Verringerung der Intensität der spontan emittierten Strahlung eintritt, weil nunmehr vermehrt eine stimulierte Emission von Photonen stattfindet, die mit dem einsetzenden Laserbetrieb und der Erzeugung des Laserimpulses einhergeht.

Eine besonders effiziente Erfassung der erfindungsgemäß analysierten spontan emittierten Strahlung ist einer Erfindungsvariante zufolge dadurch ermöglicht, dass zumindest ein Teil der spontan emittierten Strahlung mittels eines direkt im Bereich der Lasereinrichtung angeordneten Detektors, insbesondere mittels einer Photodiode, erfasst wird.

Alternativ oder ergänzend hierzu ist es ferner möglich, dass zumindest ein Teil der spontan emittierten Strahlung über eine Lichtleitereinrichtung von der Lasereinrichtung in einen entfernt von der Lasereinrichtung angeordneten Detektor übertragen wird, bei dem es sich wiederum um eine Photodiode handeln kann.

Es ist erfindungsgemäβ vorgesehen, dass der Lasereinrichtung das Pumplicht über mindestens eine erste Lichtleitfaser einer mehrere Lichtleitfasern aufweisenden Lichtleitereinrichtung zugeführt wird, und dass zumindest ein Teil der spontan emittierten Strahlung über mindestens eine zweite Lichtleitfaser derselben Lichtleitereinrichtung von der Lasereinrichtung an einen entfernt von der Lasereinrichtung angeordneten Detektor, insbesondere an eine Photodiode, übertragen wird.

Eine weitere ganz besonders vorteilhafte Variante des erfindungsgemäßen Betriebsverfahrens, bei der ebenfalls keine Beeinflussung eines Strahlengangs der Lasereinrichtung gegeben ist, sieht vor, dass zumindest ein Teil der spontan emittierten Strahlung radial aus der Lasereinrichtung ausgekoppelt und in einen radial außenseitig der Lasereinrichtung angeordneten Abschnitt der Lichtleitereinrichtung eingekoppelt wird.

Als eine weitere Lösung der Aufgabe der vorliegenden Erfindung ist eine Lasereinrichtung gemäß Patentanspruch 10 angegeben.

Bei einer ganz besonders vorteilhaften Ausführungsform der erfindungsgemäßen Lasereinrichtung ist vorgesehen, dass ein Endabschnitt einer ersten Lichtleitfaser zur Versorgung der Lasereinrichtung mit Pumplicht so angeordnet ist, dass das Pumplicht zumindest longitudinal in die Lasereinrichtung einkoppelbar ist. Alternativ oder ergänzend kann vorgesehen sein, dass eine zweite Lichtleitfaser, die derselben Lichtleitereinrichtung zugeordnet ist, zur Übertragung zumindest eines Teils der spontan emittierten Strahlung von der Lasereinrichtung an einen entfernt von der Lasereinrichtung angeordneten Detektor, insbesondere an eine Photodiode, vorgesehen ist.

Die erfindungsgemäße Lasereinrichtung und das hierfür vorgesehene erfindungsgemäße Betriebsverfahren sind besonders geeignet zum Einsatz in einer Zündeinrichtung einer Brennkraftmaschine beispielsweise eines Kraftfahrzeugs. Die erfindungsgemäße Lasereinrichtung und das zugehörige Betriebsverfahren finden darüberhinaus auch Anwendung bei Stationärmotoren oder generell in anderen laserbasierten Systemen, bei denen die Gewinnung von Informationen über einen Betriebszustand der Lasereinrichtung von Bedeutung ist.

Weitere vorteilhafte Ausgestaltungen der vorliegenden Erfindung sind Gegenstand der Unteransprüche.

Die Anwendung des erfindungsgemäßen Prinzips ist nicht auf passiv gütegeschaltete Lasersysteme begrenzt. Auch bei aktiv gütegeschalteten Lasersystemen, bei denen prinzipbedingt durch die notwendige Ansteuerung eines aktiven Güteschalters der Zeitpunkt der Erzeugung eines Laserimpulses bereits bekannt ist, kann das erfindungsgemäße Verfahren beispielsweise zu Diagnosezwecken oder zur Plausibilisierung von erfassten Betriebsdaten eingesetzt werden.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in der Zeichnung.

### Kurze Beschreibung der Zeichnung

In der Zeichnung zeigt:
- Figur 1: eine erste Ausführungsform einer erfindungsgemäßen Lasereinrichtung,
- Figur 2: den zeitlichen Verlauf einer erfindungsgemäß erfassten und analysierten Intensität der von der Lasereinrichtung gemäß Figur 1 spontan emittierten Strahlung,
- Figur 3: eine weitere Ausführungsform der erfindungsgemäßen Lasereinrichtung, und
- Figur 4: ein laserbasiertes Zündsystem für eine Brennkraftmaschine mit der erfindungsgemäßen Lasereinrichtung gemäß Figur 1.

### Ausführungsformen der Erfindung

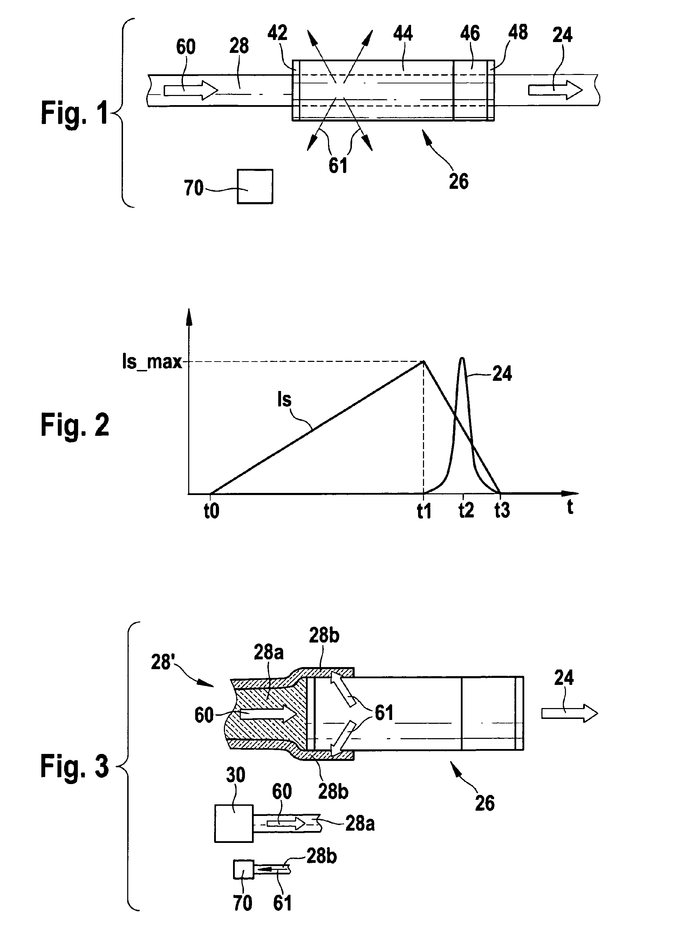

Figur 1 zeigt schematisch eine Detailansicht einer ersten Ausführungsform der Lasereinrichtung 26. Die Lasereinrichtung 26 weist einen laseraktiven Festkörper 44 auf, dem eine auch als Q-switch bezeichnete passive Güteschaltung 46 optisch nachgeordnet ist. Der laseraktive Festkörper 44 bildet hierbei zusammen mit der passiven Güteschaltung 46 sowie dem in Figur 1 links hiervon angeordneten Einkoppelspiegel 42 und dem Auskoppelspiegel 48 einen Laser-Oszillator aus, dessen Schwingverhalten von der passiven Güteschaltung 46 abhängt und damit zumindest mittelbar in an sich bekannter Weise steuerbar ist.

Bei der in Figur 1 abgebildeten Konfiguration wird die Lasereinrichtung 26 beziehungsweise der laseraktive Festkörper 44 durch den Einkoppelspiegel 42 hindurch mit Pumplicht 60 beaufschlagt, das Elektronen in dem laseraktiven Festkörper 44 anregt und damit zu einer an sich bekannten Besetzungsinversion führt. Der Einkoppelspiegel 42 besitzt für das eingestrahlte Pumplicht 60 einen verhältnismäßig großen Transmissionskoeffizienten. Das Pumplicht 60 wird der Lasereinrichtung 26 vorliegend über eine Lichtleitereinrichtung 28 zugeführt.

Während die passive Güteschaltung 46 ihren Ruhezustand aufweist, in dem sie einen verhältnismäßig geringen Transmissionskoeffizienten besitzt, wird ein Laserbetrieb in dem laseraktiven Festkörper 44 beziehungsweise in dem durch den Einkoppelspiegel 42 und den Auskoppelspiegel 48 begrenzten Festkörper 44, 46 vermieden. Mit steigender Pumpdauer, das heißt während einer fortgesetzten Beaufschlagung mit dem Pumplicht 60, steigt jedoch auch die Strahlungsintensität in dem Laser-Oszillator 42, 44, 46, 48 an, so dass die passive Güteschaltung 46 schließlich ausbleicht. Das heißt, ihr Transmissionskoeffizient steigt, und ein Laserbetrieb in dem Laser-Oszillator 42, 44, 46, 48 beginnt.

Auf die vorstehend beschriebene Weise entsteht ein auch als Riesenimpuls bezeichneter Laserimpuls 24, der eine verhältnismäßig hohe Spitzenleistung aufweist. Der Laserimpuls 24 wird anschließend durch den in Figur 1 rechts angeordneten Auskoppelspiegel 48 aus dem Laser-Oszillator 42, 44, 46, 48 ausgekoppelt und ist beispielsweise in einer laserbasierten Zündeinrichtung für eine Brennkraftmaschine zur Entzündung eines in einem Brennraum der Brennkraftmaschine befindlichen Luft-/Kraftstoffgemischs verwendbar. Hierzu kann der Laserimpuls 24 beispielsweise durch eine entsprechende Lichtleitereinrichtung oder auch direkt durch ein dem Auskoppelspiegel 48 nachgeordnetes Brennraumfenster in den Brennraum der Brennkraftmaschine eingekoppelt werden.

Anstelle der passiven Güteschaltung 46 ist auch eine aktive Güteschaltung (nicht gezeigt) einsetzbar, die allerdings einen erhöhten konstruktiven Aufwand und eine aufwendigere Ansteuerung erfordert.

Um den Betrieb der Lasereinrichtung 26 und insbesondere die Erzeugung des Laserimpulses 24 zu überwachen, ist vorgesehen, die von der Lasereinrichtung 26 spontan emittierte Strahlung 61 zu erfassen und zu analysieren, wie sie bei der Beaufschlagung der Lasereinrichtung 26 beziehungsweise des darin enthaltenen laseraktiven Festkörpers 44 mit dem Pumplicht 60 in bekannter Weise entsteht.

Figur 2 zeigt schematisch einen zeitlichen Verlauf der erfassten Intensität Is der von der Lasereinrichtung 26 unter Beaufschlagung mit dem Pumplicht 60 spontan emittierten Strahlung 61 (Figur 1). Zu dem Zeitpunkt t0 startet die Beaufschlagung der Lasereinrichtung 26 (Figur 1) mit dem Pumplicht 60, so dass sich ein etwa linearer Anstieg der Intensität Is der spontan emittierten Strahlung ergibt. Ab dem Zeitpunkt t1 beginnt die passive Güteschaltung 46 auszubleichen, d.h. ihren Transmissionskoeffizienten in der vorstehend beschriebenen Weise zu verringern, so dass dementsprechend ein Laserbetrieb in dem durch die Komponenten 42, 44, 46, 48 gebildeten Laserresonator einsetzen kann. Die hierbei auftretenden stimulierten Emissionen von Photonen führen dazu, dass ab dem Zeitpunkt t1 der zeitliche Verlauf der erfindungsgemäß analysierten Intensität Is der spontan emittierten Strahlung 61 einen negativen Gradienten annimmt. Zu dem Zeitpunkt t2 wird der Laserimpuls 24 von der Lasereinrichtung 26 abgestrahlt, und die Intensität Is der spontan emittierten Strahlung 61 reduziert sich in der in Figur 2 abgebildeten Weise bis zu dem Zeitpunkt t3.

Der vorstehend beschriebene zeitliche Verlauf Is der spontan emittierten Strahlung 61 wird erfasst und insbesondere auf das Auftreten des lokalen Maximums Is_max zu dem Zeitpunkt t 1 hin überwacht.

Das lokale Maximum Is_max ist charakteristisch für das Einsetzen des Laserbetriebs bei der Lasereinrichtung 26 und zeigt demnach an, dass tatsächlich ein Laserimpuls 24 erzeugt worden ist. Andernfalls, das heißt sofern z.B. kein Laserimpuls 24 erzeugt wird, würde die erfindungsgemäß analysierte Intensität Is der spontan emittierten Strahlung 61 nicht in dem in Figur 2 abgebildeten Maße bis hin zu dem Zeitpunkt t3 absinken. Das heißt, aus dem Auftreten des lokalen Maximums Is_max zu dem Zeitpunkt t1 und aus dem nachfolgenden Gradienten der Intensität Is kann zuverlässig auf die tatsächliche Erzeugung des Laserimpulses 24 geschlossen werden.

Aufgrund der Tatsache, dass die spontan emittierte Strahlung 61 - im Unterschied zu der stimuliert emittierten Laserstrahlung, die mit dem Laserimpuls 24 korrespondiert - in alle Raumrichtungen emittiert wird, ist erfindungsgemäß vorteilhaft die Möglichkeit gegeben, die spontan emittierte Strahlung 61 insbesondere außerhalb des Hauptstrahlengangs der Lasereinrichtung 26 zu erfassen, so dass keine zusätzlichen optischen Elemente zur Auskopplung eines Teils des Laserimpulses 24 innerhalb des Hauptstrahlengangs erforderlich sind, wie dies bei den herkömmlichen Systemen der Fall ist.

Figur 1 zeigt hierzu beispielhaft einen bezüglich der Lasereinrichtung 26 radial außenseitig angeordneten Detektor 70 zur Detektion der spontan emittierten Strahlung 61, bei dem es sich beispielsweise um eine Photodiode handeln kann.

Figur 3 zeigt die Ausführungsform der erfindungsgemäßen Lasereinrichtung 26.

Die Lasereinrichtung 26 gemäß Figur 3 verfügt über eine Lichtleitereinrichtung 28', die mehrere einzelne Lichtleitfasern 28a, 28b aufweist. Die Lichtleitereinrichtung 28' kann dadurch vorteilhaft zur gleichzeitigen Versorgung der Lasereinrichtung 26 mit Pumplicht 60 und zur Übertragung erfindungsgemäß erfasster und zu analysierender spontan emittierter Strahlung 61 an einen entfernt von der Lasereinrichtung 26 angeordneten Detektor 70 eingesetzt werden, dass die erste Lichtleitfaser 28a beziehungsweise ein entsprechender Endabschnitt der ersten Lichtleitfaser 28a gegenüber einem stirnseitigen Ende der Lasereinrichtung 26 angeordnet ist, so dass das Pumplicht 60 direkt über den in Figur 3 nicht näher bezeichneten Einkoppelspiegel in die Lasereinrichtung 26 eingekoppelt werden kann.

Darüberhinaus ermöglicht die zweite Lichtleitfaser 28b gleichzeitig ein Auskoppeln der spontan emittierten Strahlung 61 aus der Lasereinrichtung 26 und eine Übertragung der ausgekoppelten Strahlung an einen entfernt angeordneten Detektor 70.

Figur 3 zeigt zusätzlich zu den in dem Bereich der Lasereinrichtung 26 angeordneten Komponenten, wie beispielsweise einem Endabschnitt der Lichtleitereinrichtung 28' die entfernt zu der Lasereinrichtung 26 angeordnete Pumplichtquelle 30, die die erste Lichtleitfaser 28a der Lichtleitereinrichtung 28' mit Pumplicht 60 versorgt. Ferner ist aus Figur 3 der ebenfalls entfernt von der Lasereinrichtung 26 angeordnete Detektor 70 ersichtlich, dem über die zweite Lichtleitfaser 28b der Lichtleitereinrichtung 28' die spontan emittierte Strahlung 61 zugeführt wird.

Die erfindungsgemäße Konfiguration der Lichtleitereinrichtung 28' ist besonders vorteilhaft, da sie ohne wesentlichen baulichen Aufwand die gleichzeitige Versorgung der Lasereinrichtung 26 mit Pumplicht 60 ermöglicht und darüber hinaus ein Übertragen der spontan emittierten Strahlung 61 an den Detektor 70. Die beschriebene Funktionalität kann vorteilhaft allein dadurch erreicht werden, dass die entsprechenden einzelnen Lichtleitfasern 28a, 28b der Lichtleitereinrichtung 28' den jeweiligen Bereichen der Lasereinrichtung 26 zugeordnet werden.

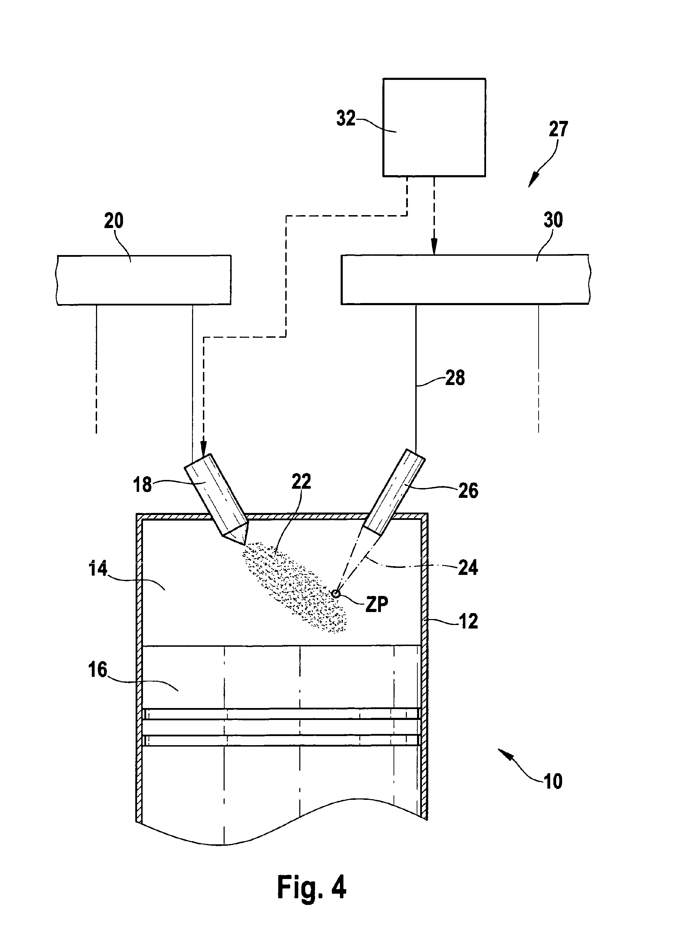

Figur 4 zeigt eine weitere Ausführungsform der vorliegenden Erfindung, bei der die erfindungsgemäße Lasereinrichtung 26 in einer Zündeinrichtung 27 einer Brennkraftmaschine 10 eines Kraftfahrzeugs verwendet wird.

Die Brennkraftmaschine trägt in Figur 4 insgesamt das Bezugszeichen 10. Sie dient zum Antrieb des nicht dargestellten Kraftfahrzeugs. Die Brennkraftmaschine 10 umfasst mehrere Zylinder, von denen in Figur 4 nur einer mit dem Bezugszeichen 12 bezeichnet ist. Ein Brennraum 14 des Zylinders 12 wird von einem Kolben 16 begrenzt. Kraftstoff gelangt in den Brennraum 14 direkt durch einen Injektor 18, der an einen auch als Rail bezeichneten Kraftstoff-Druckspeicher 20 angeschlossen ist.

In den Brennraum 14 eingespritzter Kraftstoff 22 wird mittels eines Laserstrahls entzündet, der vorzugsweise in Form eines Laserimpulses 24 von der erfindungsgemäßen Lasereinrichtung 26 der Zündeinrichtung 27 in den Brennraum 14 abgestrahlt wird und auf den Zündpunkt ZP fokussiert ist. Hierzu wird die Lasereinrichtung 26 über die Lichtleitereinrichtung 28 mit Pumplicht 60 (Figur 1) gespeist, das bei der Zündeinrichtung 27 gemäß Figur 4 von der Pumplichtquelle 30 bereitgestellt wird. Die Pumplichtquelle 30 wird von einem Steuergerät 32 gesteuert, das auch den Injektor 18 ansteuert.

Die erfindungsgemäße Erfassung und Auswertung der radial ausgekoppelten spontan emittierten Strahlung 61 ermöglicht vorteilhaft eine sichere und flexible Gewinnung von Betriebsinformationen der Lasereinrichtung 26 ohne eine Verschlechterung eines optischen Wirkungsgrads des Systems.

Die Lasereinrichtung 26 mit den Komponenten 42, 44, 46, 48 ist bevorzugt monolithisch aufgebaut, kann jedoch auch diskret realisiert werden.

## Patentansprüche

1. Verfahren zum Betreiben einer Lasereinrichtung (26), die einen laseraktiven Festkörper (44) und eine, vorzugsweise passive, Güteschaltung (46) aufweist, bei dem die Lasereinrichtung (26) mit Pumplicht (60) beaufschlagt wird, um einen Laserimpuls (24) zu erzeugen, wobei von der Lasereinrichtung (26) spontan emittierte Strahlung (61) analysiert wird, um hieraus auf einen Betriebszustand der Lasereinrichtung (26) zu schließen, insbesondere auf die Erzeugung eines Laserimpulses (24), **dadurch gekennzeichnet, dass** der Lasereinrichtung (26) das Pumplicht (60) über mindestens eine erste Lichtleitfaser (28a) einer mehrere Lichtleitfasern (28a, 28b) aufweisenden Lichtleitereinrichtung (28') zugeführt wird, und dass zumindest ein Teil der spontan emittierten Strahlung (61) über mindestens eine zweite Lichtleitfaser (28b) derselben Lichtleitereinrichtung (28') von der Lasereinrichtung (26) an einen entfernt von der Lasereinrichtung (26) angeordneten Detektor, insbesondere an eine Photodiode (70), übertragen wird.

2. Verfahren nach Anspruch 1, **dadurch gekennzeichnet, dass** die Lasereinrichtung (26) zumindest longitudinal mit dem Pumplicht (60) angeregt wird, und dass transversal abgestrahlte spontan emittierte Strahlung (61) analysiert wird.

3. Verfahren nach einem der vorstehenden Ansprüche, **dadurch gekennzeichnet, dass** ein zeitlicher Verlauf (Is) der Intensität der spontan emittierten Strahlung (61) erfasst und analysiert wird.

4. Verfahren nach einem der vorstehenden Ansprüche, **dadurch gekennzeichnet, dass** die Analyse der spontan emittierten Strahlung (61) in Abhängigkeit eines Pumpstartzeitpunkts (t0) durchgeführt wird, zu dem die Beaufschlagung der Lasereinrichtung (26) mit Pumplicht (60) gestartet wird.

5. Verfahren nach einem der vorstehenden Ansprüche, **dadurch gekennzeichnet, dass** die Analyse der spontan emittierten Strahlung (61) das Auffinden eines Maximums (Is_max) der Intensität der spontan emittierten Strahlung (61) umfasst.

6. Verfahren nach einem der vorstehenden Ansprüche, **dadurch gekennzeichnet, dass** zumindest ein Teil der spontan emittierten Strahlung (61) mittels eines direkt im Bereich der Lasereinrichtung (26) angeordneten Detektors, insbesondere mittels einer Photodiode (70), erfasst wird.

7. Verfahren nach einem der vorstehenden Ansprüche, **dadurch gekennzeichnet, dass** zumindest ein Teil der spontan emittierten Strahlung (61) über eine Lichtleitereinrichtung (28') von der Lasereinrichtung (26) an einen entfernt von der Lasereinrichtung (26) angeordneten Detektor, insbesondere an eine Photodiode (70), übertragen wird.

8. Verfahren nach einem der Ansprüche 6 oder 7, **dadurch gekennzeichnet, dass** zumindest ein Teil der spontan emittierten Strahlung (61) radial aus der Lasereinrichtung (26) ausgekoppelt und in einen radial außenseitig der Lasereinrichtung (26) angeordneten Abschnitt der Lichtleitereinrichtung (28') eingekoppelt wird.

9. Lasereinrichtung (26) mit einem laseraktiven Festkörper (44) und einer, vorzugsweise passiven, Güteschaltung (46), wobei die Lasereinrichtung (26) mit Pumplicht (60) beaufschlagbar ist, um einen Laserimpuls (24) zu erzeugen, mit Mitteln (70) zur Detektion einer von der Lasereinrichtung (26) spontan emittierten Strahlung (61), **gekennzeichnet durch** eine Lichtleitereinrichtung (28'), die mehrere einzelne Lichtleitfasern (28a, 28b) aufweist, von denen mindestens eine erste Lichtleitfaser (28a) zur Versorgung der Lasereinrichtung (26) mit Pumplicht (60) vorgesehen ist, und von denen mindestens eine zweite Lichtleitfaser (28b) zur Übertragung zumindest eines Teils der spontan emittierten Strahlung (61) von der Lasereinrichtung (26) an einen entfernt von der Lasereinrichtung (26) angeordneten Detektor, insbesondere an eine Photodiode (70), vorgesehen ist.

10. Lasereinrichtung (26) nach Anspruch 9, **dadurch gekennzeichnet, dass** die Mittel (70) bezüglich der Lasereinrichtung (26) radial außenseitig angeordnet sind.

11. Lasereinrichtung (26) nach einem der Ansprüche 9 bis 10, **gekennzeichnet durch** eine Lichtleitereinrichtung (28'), die dazu ausgebildet ist, zumindest einen Teil der von der Lasereinrichtung (26) spontan emittierten Strahlung (61) an einen entfernt von der Lasereinrichtung (26) angeordneten Detektor, insbesondere an eine Photodiode (70), zu übertragen.

12. Lasereinrichtung (26) nach Anspruch 11, **dadurch gekennzeichnet, dass** ein Einkoppelabschnitt der Lichtleitereinrichtung (28') zur Einkopplung zumindest eines Teils der von der Lasereinrichtung (26) spontan emittierten Strahlung (61) radial außenseitig an der Lasereinrichtung (26) angeordnet ist.

13. Lasereinrichtung (26) nach Anspruch 9, **dadurch gekennzeichnet, dass** ein Endabschnitt der ersten Lichtleitfaser (28a) zur Versorgung der Lasereinrichtung (26) mit Pumplicht (60) so angeordnet ist, dass das Pumplicht (60) zumindest longitudinal in die Lasereinrichtung (26) einkoppelbar ist.

14. Zündeinrichtung (27) für eine Brennkraftmaschine (10), insbesondere eines Kraftfahrzeugs, mit mindestens einer Lasereinrichtung (26) nach einem der Ansprüche 9 bis 13.

## Claims

1. Method for operating a laser device (26) having a laser-active solid (44) and a, preferably passive, Q-switch (46), wherein pump light (60) is applied to the laser device (26) in order to generate a laser pulse (24),
wherein radiation (61) spontaneously emitted by the laser device (26) is analysed in order to deduce an operating state of the laser device (26) therefrom, in particular the generation of a laser pulse (24), **characterized in that**
the pump light (60) is fed to the laser device (26) via at least one first optical fibre (28a) of an optical waveguide device (28') having a plurality of optical fibres (28a, 28b), and
**in that** at least part of the spontaneously emitted radiation (61) is transmitted via at least one second optical fibre (28b) of the same optical waveguide device (28') from the laser device (26) to a detector arranged at a distance from the laser device (26), in particular to a photodiode (70).

2. Method according to Claim 1, **characterized in that** the laser device (26) is excited at least longitudinally with the pump light (60), and **in that** spontaneously emitted radiation (61) emitted transversely is analysed.

3. Method according to either of the preceding claims, **characterized in that** a temporal profile (Is) of the intensity of the spontaneously emitted radiation (61) is detected and analysed.

4. Method according to any of the preceding claims, **characterized in that** the analysis of the spontaneously emitted radiation (61) is carried out depending on a pump start instant (t0) at which the application of pump light (60) to the laser device (26) is started.

5. Method according to any of the preceding claims, **characterized in that** the analysis of the spontaneously emitted radiation (61) comprises finding a maximum (Is_max) of the intensity of the spontaneously emitted radiation (61).

6. Method according to any of the preceding claims, **characterized in that** at least part of the spontaneously emitted radiation (61) is detected by means of a detector arranged directly in the region of the laser device (26), in particular by means of a photodiode (70).

7. Method according to any of the preceding claims, **characterized in that** at least part of the spontaneously emitted radiation (61) is transmitted via an optical waveguide device (28') from the laser device (26) to a detector arranged at a distance from the laser device (26), in particular to a photodiode (70).

8. Method according to either of Claims 6 and 7, **characterized in that** at least part of the spontaneously emitted radiation (61) is coupled out from the laser device (26) radially and is coupled into a section of the optical waveguide device (28') that is arranged radially on the outer side of the laser device (26).

9. Laser device (26) comprising a laser-active solid (44) and a, preferably passive, Q-switch (46), wherein pump light (60) can be applied to the laser device (26) in order to generate a laser pulse (24),
comprising means (70) for detecting a radiation (61) spontaneously emitted by the laser device (26), **characterized by**
an optical waveguide device (28') having a plurality of individual optical fibres (28a, 28b), at least one first optical fibre (28a) of which is provided for supplying the laser device (26) with pump light (60), and
at least one second optical fibre (28b) of which is provided for transmitting at least part of the spontaneously emitted radiation (61) from the laser device (26) to a detector arranged at a distance from the laser device (26), in particular to a photodiode (70) .

10. Laser device (26) according to Claim 9, **characterized in that** the means (70) are arranged radially on the outer side with respect to the laser device (26).

11. Laser device (26) according to either of Claims 9 and 10, **characterized by** an optical waveguide device (28') designed to transmit at least part of the radiation (61) spontaneously emitted by the laser device (26) to a detector arranged at a distance from the laser device (26) in particular to a photodiode (70).

12. Laser device (26) according to Claim 11, **characterized in that** a coupling-in section of the optical waveguide device (28') for coupling in at least part of the radiation (61) spontaneously emitted by the laser device (26) is arranged radially on the outer side on the laser device (26).

13. Laser device (26) according to Claim 9, **characterized in that** an end section of the first optical fibre (28a) for supplying the laser device (26) with pump light (60) is arranged such that the pump light (60) can be coupled into the laser diode (26) at least longitudinally.

14. Ignition device (27) for an internal combustion engine (10) in particular of a motor vehicle, comprising at least one laser device (26) according to any of Claims 9 to 13.

## Revendications

1. Procédé d'utilisation d'un dispositif laser (26) qui présente un corps solide (44) à action laser et un circuit de déclenchement (46), de préférence passif, et dans lequel le dispositif laser (26) est alimenté en lumière de pompage (60) pour former une impulsion laser (24),
le rayonnement (61) émis spontanément par le dispositif laser (26) étant analysé pour en conclure sur l'état de fonctionnement du dispositif laser (26) et en particulier sur la formation d'une impulsion laser (24),
**caractérisé en ce que**
la lumière de pompage (60) est amenée au dispositif laser (26) par au moins une première fibre (28a) de guidage de lumière d'un dispositif (28') de guidage de lumière qui présente plusieurs fibres (28a, 28b) de guidage de lumière et
**en ce qu'**au moins une partie du rayonnement (61) spontanément émis est transférée par l'intermédiaire d'au moins une deuxième fibre (28b) de guidage de lumière du même dispositif (28') de guidage de lumière depuis le dispositif laser (26) jusqu'à un détecteur, en particulier une photodiode (70), disposé à distance du dispositif laser (26).

2. Procédé selon la revendication 1, **caractérisé en ce que** le dispositif laser (26) est excité au moins longitudinalement par la lumière de pompage (60) et **en ce que** le rayonnement (61) émis spontanément dans la direction transversale est analysé.

3. Procédé selon l'une des revendications précédentes, **caractérisé en ce que** l'évolution temporelle (Is) de l'intensité du rayonnement (61) émis spontanément est saisie et analysée.

4. Procédé selon l'une des revendications précédentes, **caractérisé en ce que** l'analyse du rayonnement (61) émis spontanément est réalisée en fonction d'un instant (t0) de début de pompage auquel le dispositif laser (26) commence à être alimenté en lumière de pompage (60).

5. Procédé selon l'une des revendications précédentes, **caractérisé en ce que** l'analyse du rayonnement (61) émis spontanément comporte la découverte d'un maximum (Is_max) de l'intensité du rayonnement (61) émis spontanément.

6. Procédé selon l'une des revendications précédentes, **caractérisé en ce qu'**au moins une partie de rayonnement (61) émis spontanément est détectée au moyen d'un détecteur disposé directement au niveau du dispositif laser (26) et en particulier au moyen d'une photodiode (70).

7. Procédé selon l'une des revendications précédentes, **caractérisé en ce qu'**au moins une partie de rayonnement (61) émis spontanément est transmise par l'intermédiaire d'un dispositif (28') de guidage de lumière depuis le dispositif laser (26) jusqu'à un détecteur, en particulier une photodiode (70), disposé à distance du dispositif laser (26).

8. Procédé selon l'une des revendications 6 ou 7, **caractérisé en ce qu'**au moins une partie du rayonnement (61) émis spontanément est extraite radialement du dispositif laser (26) et est injecté dans une partie du dispositif (28') de guidage de lumière disposée radialement à l'extérieur du dispositif laser (26).

9. Dispositif laser (26) doté d'un corps solide (44) à action laser et d'un circuit de déclenchement (46) de préférence passif, le dispositif laser (26) pouvant être alimenté en lumière de pompage (60) pour former une impulsion laser (24),
le dispositif présentant des moyens (70) de détection d'un rayonnement (61) émis spontanément par le dispositif laser (26),
**caractérisé par**
un dispositif (28') de guidage de lumière qui présente plusieurs fibres (28a, 28b) séparées de guidage de lumière dont au moins une première fibre (28a) de guidage de lumière est prévue pour alimenter le dispositif laser (26) en lumière de pompage (60) et
dont au moins une deuxième fibre (28b) de guidage de lumière est prévue pour transférer au moins une partie du rayonnement (61) émis spontanément par le dispositif laser (26) à un détecteur, en particulier une photodiode (70), disposé à distance du dispositif laser (26).

10. Dispositif laser (26) selon la revendication 9, **caractérisé en ce que** les moyens (70) sont disposés radialement à l'extérieur du dispositif laser (26).

11. Dispositif laser (26) selon l'une des revendications 9 à 10, **caractérisé par** un dispositif (28') de guidage de lumière configuré pour transférer au moins une partie du rayonnement (61) émis spontanément par le dispositif laser (26) à un détecteur, en particulier une photodiode (70), disposé à distance du dispositif laser (26).

12. Dispositif laser (26) selon la revendication 11, **caractérisé en ce qu'**une partie d'injection du dispositif (28') de guidage de lumière est disposée radialement à l'extérieur sur le dispositif laser (26) pour injecter au moins une partie du rayonnement (61) émis spontanément par le dispositif laser (26).

13. Dispositif laser (26) selon la revendication 9, **caractérisé en ce qu'**une partie d'extrémité de la première fibre (28a) de guidage de lumière prévue pour alimenter le dispositif laser (26) en lumière de pompage (60) est disposée de telle sorte que la lumière de pompage (60) puisse être injectée au moins longitudinalement dans le dispositif laser (26).

14. Dispositif d'allumage (27) pour moteur à combustion interne (10), en particulier d'un véhicule automobile, présentant au moins un dispositif laser (26) selon l'une des revendications 9 à 13.
